# EUROPÄISCHE PATENTSCHRIFT

(11) **EP 1 620 191 B1**
(45) Veröffentlichungstag und Bekanntmachung des Hinweises auf die Patenterteilung: **23.11.2016**
(21) Anmeldenummer: 04738474.8
(22) Anmeldetag: 24.04.2004
(51) Int. Cl.: B01D 3/14

(54) **DESTILLATIONSVERFAHREN**
DISTILLATION METHOD
PROCEDE DE DISTILLATION

(30) Priorität: 25.04.2003 DE 10319046
(43) Veröffentlichungstag der Anmeldung: 01.02.2006
(73) Patentinhaber: Whitefox Technologies Limited, London SW1A 2DD (GB)
(72) Erfinder: BLUM, Stephan, Rüdiger, Calgary, Alberta T2N 3X4 (CA); KAISER, Bernhard, 52399 Merzenich (DE)
(74) Vertreter: Potter Clarkson LLP
(86) Internationale Anmeldenummer: PCT/DE2004/000867
(87) Internationale Veröffentlichungsnummer: WO 2004/096403

(56) Entgegenhaltungen:
- WO-A-01/10540
- DE-C- 4 137 572
- DE-C- 4 302 030
- FR-A- 2 743 069
- US-A- 5 143 526
- US-A- 5 480 665
- US-A1- 2004 000 473

## Beschreibung

Die Erfindung betrifft ein Verfahren der Destillation, insbesondere von Ethanol aus einer Maische.

Bei einem herkömmlichen Verfahren der Destillation und Dehydrierung von Ethanol aus einer Biermaische, nach einer Fermentation etwa 10% Ethanol, 85% Wasser und 5% Feststoffe aufweisend, wird diese vorgewärmt einer ersten Destillationskolonne zugeführt. In der ersten Destillationskolonne wird die Maische eingedampft, wodurch Festbestandteile als Sumpfprodukt mit Wasser abgeführt werden können. Ein Teil dieses Sumpfproduktes wird üblicherweise der Destillationskolonne nach einer Erwärmung wieder zurückgeführt (Reboiler).

Das erste dampfförmige Destillat, noch enthaltend Wasser, Ethanol und Fuselöle wird, ggfls. über einen Sammel- und Mischtank, einer zweiten Destillationskolonne zugeführt, die als Rektifizierkolonne ausgebildet ist. In dieser Rektifizierkolonne erfolgt eine weitergehende Trennung, bei der die Fuselöle in einem Seitenstrom abgeführt werden. Von dem in der zweiten Destillationskolonne ausgefällten Wasser als Sumpfprodukt wird ein geringer Anteil nach Erwärmung erneut der Rektifizierkolonne zurückgeführt (Reboiler) und im Übrigen ebenfalls abgeführt, so dass es aus dem Produktionsprozess ausscheidet. Das Destillat der zweiten Destillationskolonne, nach wie vor Wasser und Ethanol enthaltend, kann teilweise der ersten und zweiten Destillationskolonne wieder zurückgeführt werden, ggfls. über den bereits erwähnten Sammeltank.

Die überwiegende Menge der das zweite Destillat darstellenden Ethanol-Wassermischung von etwa 95% Ethanol und 5% Wasser erfährt eine letzte Dehydrierung, um möglichst reines Ethanol von einem Reinheitsgrad von 99 bis 99,8% zu erhalten. Diese letzte Dehydrierung erfolgt mittels molekularwirkender Siebe, bei denen kristalline Zeolithe schwammartig H₂O Moleküle adsorbieren.

Die Zeolithe eines Molekularsiebes sind allerdings rasch wassergesättigt. Für eine gleich bleibende Dehydrierung müssen daher wassergesättigte Zeolithe regeneriert werden. Infolge finden Molekularsiebe regelmäßig paarweise Verwendung. Es kann dann von einem ersten, aktiven Molekularsieb hochreines Ethanol zur Verfügung gestellt werden, das auch für die Regenerierung eines zweiten, passiven Molekularsiebes herangezogen werden kann. Bei der Regenerierung eines passiven Molekularsiebes kann das dort verwendete Ethanol einer Destillationskolonne zurückgeführt werden, wobei dieser Rückstrom ca. 30% des erhaltenen reinen Ethanols des aktiven Molekularsiebes betragen kann. Hierbei verursacht der ständige Wechsel der Druckbelastung der Molekularsiebe einen staubförmigen Abrieb des Füllmaterials. Dies belastet nachgeschaltete Anlagenstufen, die periodisch vollständig zu ersetzen sind. Dies schlägt sich in Investitions- und Betriebskosten nachteilig nieder.

Die Dehydrierung von Ethanol ist ein energieintensiver Prozess. Insbesondere die Eindampfung der Maische in der ersten Destillationskolonne wie auch die Notwendigkeit großer Rücklaufmengen der Destillate verursachen erhebliche Betriebs- und Investitionskosten. Auch ist ein hoher Reinheitsgrad von ca. 90-95% Ethanol des Ethanol-Wassergemischs vor einer Behandlung mit Molekularsieben notwendig, wozu apparatetechnisch und betriebskostenmäßig sehr aufwändig das Stoffgemisch möglichst nahe an den azetropen Punkt heran rektifiziert werden muß. Infolgedessen sind in der Rektifizierkolonne eine Vielzahl von Trennstufen und ein hoher Rücklauf erforderlich.

Vor diesem technischen Hintergrund macht die Erfindung es sich zur Aufgabe, ein Verfahren der Destillation zur Verfügung zu stellen, durch das die Wirtschaftlichkeit insbesondere bei der Dehydrierung von Ethanol aus einer Maische, deutlich verbessert wird.

Aus der DE 43 02 030 C1 ist ein Verfahren für die Herstellung eines alkoholfreien Bieres bekannt. In einer ersten Verfahrensstufe mit wenigstens einem Membranmodul und einer Dialysataufbereitungskolonne erfolgt die Gewinnung des alkoholfreien Bieres aus einem zugeführten Rohbier. Das Kondensat der Dialysataufbereitungskolonne wird einer Rektifizierkolonne zugeführt, in der eine Trennung des zugeführten Kondensates in Lutterwasser und ein Äthanol-Wasser-Gemisch erfolgt. Das Äthanol-Wasser-Gemisch wird gesammelt und einem Blockheizkraftwerk als Brennstoff zur Verfügung gestellt.

Auch das aus der DE 41 37 572 C1 bekannte Umkehrosmoseverfahren dient originär der Herstellung alkoholreduzierter Getränke wie Wein und Schaumwein. Ein alkoholhaltiges Ausgangsgetränk wird dort über einen Vorratsbehälter einem Membranmodul zugeführt. Das Permeat des Membranmoduls wird einer Vakuumsdestillationsanlage und deren Kondensat für das Gewinnen eines alkoholfreien Getränks einer Absorptionseinrichtung zugeführt.

Zur Lösung dieser technischen Problematik wird bei einem Verfahren der Destillation, insbesondere von Ethanol aus einer Maische, bei dem ein Zulauf einer ersten Destillationskolonne (Stripper) und ein Destillat der ersten Destillationskolonne einer zweiten Destillationskolonne (Rektifizierkolonne) zugeführt wird, darauf abgestellt, dass mittels eines ersten Membran-Trennverfahrens eine Reinigung des Zulaufs erfolgt, wobei ein Permeat des ersten Membran-Trennverfahrens der zweiten Destillationskolonne und ein Retentat des ersten Membran-Trennverfahrens der ersten Destillationskolonne zugeführt wird und/oder mittels eines zweiten Membran-Trennverfahrens eine Reinigung des Destillats der zweiten Destillationskolonne für den Erhalt eines Endprodukts erfolgt.

Membran-Trennverfahren sind in vielfältigen Ausführungsformen bekannt und bewährt. In vorteilhafter Weise finden bei den meisten Membran-Trennverfahren während der Trennung keine Phasenänderungen des behandelten Produkts statt und werden von daher keine latenten Energiemengen bewegt. Darüber hinaus sind die Membrane selbst gegenüber den Komponenten der Stoffmischung inert, wodurch keine zusätzliche Verunreinigung durch stoffliche Trennhilfsmittel im Produkt erfolgt. Damit entfällt auch eine nachfolgende Reinigung des Produkts von den Verunreinigungen durch solche Trennhilfsmittel. Eine Regenerierung derartiger Trennvorrichtungen ist darüber hinaus nicht von Nöten.

Bevorzugt finden als Membran-Trennverfahren die sogenannten Membranverfahren und von diesen insbesondere für eine Behandlung des Zulaufs, insbesondere einer Biermaische bei der Erzeugung von Ethanol, eine Membranfiltration Verwendung. Durch diese Membranfiltration bspw. der Maische wird ein rein flüssiges Ethanol-Wasser-Fuselölgemisch dann als Permeat zur Verfügung gestellt. Das verbleibende Retentat mit einem erhöhten Maischebreianteil wird bevorzugt nach einer Vorwärmung in üblicher Weise der ersten Destillationskolonne zugeführt.

In vorteilhafter Weise kann eine dynamische Cross Flow Membranfiltration Verwendung finden. Bei dieser Technik sind auf rotierenden Hohlwellen Membranscheiben montiert, wobei sich die Membranscheiben der verschiedenen Wellen überlappen. Die Membranscheiben werden von außen von einem Produkt angeströmt und es dringt das Permeat durch die Membran in das Innere der Scheibe und wird durch die Hohlwelle abgeführt. Durch die durch die Rotation der Scheiben hervorgerufene Relativgeschwindigkeit zwischen diesen und dem Produkt sowie die großen Turbulenzen in den Bereichen der Überlappung von Membranscheiben werden Membranverschmutzungen oder Verblockungen deutlich reduziert. Daraus resultiert eine erhöhte spezifische Permeatleistung und ein reduzierter Energieverbrauch pro Einheit Permeat. Darüber hinaus sind die Reinigungszyklen deutlich länger als bei anderen Membranverfahren, wodurch die Verfügbarkeit erhöht wird und die Betriebskosten gesenkt werden.

Das Permeat des Membran-Trennverfahrens des Zulaufs wird direkt, unter Umgehung der ersten Destillierkolonne, der zweiten Destillationskolonne zugeführt. Insbesondere bei der Herstellung von Ethanol aus einer Biermaische weist das Permeat des Membran-Trennverfahrens bereits im Wesentlichen die selbe Zusammensetzung auf wie das Destillat der ersten Destillationskolonne. Das Permeat muß daher die Prozessstufe der ersten Destillationskolonne nicht durchlaufen und kann direkt der zweiten Destillationskolonne zugeführt werden.

Damit erfolgt bereits eine erhebliche Energieeinsparung, da dieses der zweiten Destillationskolonne zugeführte Permeat nicht mehr in der ersten Destillationskolonne nach herkömmlichen Verfahren vollständig verdampft werden muß. Dies gilt insbesondere dann, wenn das Mengenverhältnis des Retentats zu dem Permeat zwischen 1 und 8

Verfahrenstechnisch von Vorteil ist weiter, wenn das Permeat des Membran-Trennverfahrens des Zulaufs mit dem ersten Destillat als Gemisch der zweiten Destillationskolonne zugeführt wird. Infolge dieser Maßnahme erfolgt die Beschickung der zweiten Destillationskolonne gleichmäßig geregelt und können Ausstoßschwankungen der ersten Destillationskolonne und des Membran-Trennverfahrens ausgeglichen werden. Alternativ kann das Permeat des Membran-Trennverfahrens des Zulaufs und das Destillat der ersten Destillationskolonne jeweils gesondert der zweiten Destillationskolonne zugeführt werden.

Je nach Ausgestaltung des Verfahrens nach der Erfindung wird das Gemisch als Zulauf oder das jeweils gesondert zugeführte Permeat und/oder das Destillat der ersten Destillationskolonne der zweiten Destillationskolonne vergleichsweise heiß zugeführt werden, bspw. mit einer Temperatur von 120°C, aber bevorzugt weitestgehend als flüssige Phase vorliegend im Gegensatz zu einer Zuführung dampfförmig am Taupunkt gem. des Standes der Technik. Es heißt dies, dass das Gemisch flüssig am Siedepunkt gehalten ist.

In der zweiten Destillationskolonne tritt im Sumpfauslaß Wasser in der flüssigen Phase aus. Durch das erfindungsgemäße Verfahren ist es daher in vorteilhafter Weise weiter ermöglicht, dass der Wasseranteil des Permeats des Membran-Trennverfahrens des Zulaufs in der zweiten Destillationskolonne in einer flüssigen Phase verbleibt. In der zweiten Destillationskolonne bedarf es deshalb nur noch eines Verdampfens des Ethanolanteils des zugeführten Gemischs. Gegenüber herkömmlichen Verfahren kann die Verdampfungsenergie des Wasseranteils eingespart werden, da das Wasser als flüssige Phase, nicht mehr dampfförmig, in die zweite Destillationskolonne eingebracht wird und dort auch in der flüssigen Phase verbleibt.

Abhängig von der Wahl des Membran-Trennverfahrens wird die der ersten Destillationskolonne zugeführte Flüssigkeitsmenge gegenüber dem Stand der Technik um 15% bis 50% reduziert. Entsprechend weniger Energie ist für ein Eindampfen der dort eingebrachten Menge von Nöten.

Infolge der erläuterten Maßnahmen kommt es in der ersten Destillationskolonne zu einer Einspeisung eines Produkts mit bereits erhöhter Maischebreikonzentration mit Feststoffen. Trotz des flüssigkeitsreduzierten Zulaufs der ersten Destillationskolonne entspricht die Sumpfkonzentration wie auch die Zusammensetzung des Destillats herkömmlichen Verfahren, jedoch ist die Konzentration innerhalb der Abtriebssäule höher.

Das Destillat der zweiten Destillationskolonne weist einen Ethanolanteil zwischen 75 Gew.% und 95 Gew.% auf. Auch wenn ein relativ großer Wasseranteil im Vergleich mit herkömmlichen Verfahren, die einen Ethanolanteil von 90 - 95 Gew.% vor einer Enddehydrierung benötigen, noch vorhanden ist, kann in vorteilhafter Weise erfindungsgemäß eine Enddehydrierung mittels eines weiteren Membran-Trennverfahrens erfolgen, insbesondere wiederum mittels eines Membranverfahrens und, wie hier bevorzugt, mittels einer Dampfpermeation. Infolgedessen kann die zweite Destillationskolonne preiswerter ausgebildet und betrieben werden.

Zweckmäßigerweise wird für eine Enddehydrierung eine Gruppe parallel geschalteter Membranmodule vorgesehen werden, der das Destillat der zweiten Destillationskolonne (Rektifizierkolonne) bevorzugt über einen Überhitzer zugeführt wird, deren Retentat, hier insbesondere Ethanol hochrein mit einem Anteil von mehr als 99%, insbesondere zwischen 99% und 99,95%, als Endprodukt zur Verfügung steht.

Die Trennwirkung der Membranmodule kann erhöht werden, wenn ein kleiner Teil eines das Endprodukt darstellenden Retentats der Membranfiltermodule jeweils einem Membranfiltermodul als Spülstrom der Permeatseite erneut zugeführt und nach dessen Durchströmen mit dem angefallenen Permeat der zweiten Destillationskolonne als ein zweiter Speisestrom wieder zurückgeführt wird.

Der vom Retentat der Membranmodule abgezweigte Spülstrom wird permanent zurückgeführt und senkt permeatseitig den Partialdruck des Wassers, so dass eine weiter verbesserte Retentatreinheit von bis zu 99,95% in wirtschaftlicher Weise erreichbar ist.

Ein solcher Spülprozess kann wie hier bevorzugt durch die Verwendung eines sogenannten internen Sweep-Stroms in Form eines Teilstroms des Retentats realisiert sein, oder alternativ durch einen externen Sweepstrom, z. B. einen Stickstoffstrom. Gemeinsam ist den beiden Techniken, dass mittels eines zusätzlichen Massestroms das Permeat physisch (konvektiv) ausgetragen wird.

Da bevorzugt in den Membranmodulen eine Dampfpermeation stattfindet und das das Endprodukt darstellende Retentat in einer gasförmigen Phase vorliegt, stellt es kein Problem dar, auch den Spülstrom dampfförmig einzubringen. Dies auch vor dem Hintergrund, dass nach einer Drossel das Permeatvakuum greift und damit der Volumenstrom des Sweepstroms stark ansteigt, wodurch eine verbesserte konvektive Gegenstromausschleusung des Permeats erfolgt.

Das Permeat der Membranmodule kann zweckmäßigerweise vor einer Einspeisung in die zweite Destillationskolonne durch die Wärme des abgeführten Sumpfproduktes der zweiten Destillationskolonne vor einer Einleitung vorgewärmt werden. Ebenso kann die Wärme des Endproduktes und/oder eines Sumpfprodukts der zweiten Destillationskolonne für eine Vorwärmung des Retentats des Membran-Trennverfahrens des Zulaufs genutzt werden, was mittels üblicher Wärmetauscher regelmäßig erfolgen kann.

Vorzugsweise ist auch in dem Zulauf der zweiten Destillationskolonne, zweckmäßigerweise unmittelbar vor einer Einspeisung, ein Wärmetauscher, insbesondere ein Kondensator, vorgesehen für ein Abführen der in der ersten Destillationskolonne für ein Verdampfen der Flüssigkeit eingebrachten, nunmehr überschüssigen Wärme.

Das Verfahren nach der Erfindung wird anhand der Zeichnung näher erläutert, in der lediglich schematisch Prozessabläufe dargestellt sind. In der Zeichnung zeigt:
- Fig. 1: einen ersten und
- Fig. 2: einen zweiten Prozessablauf.

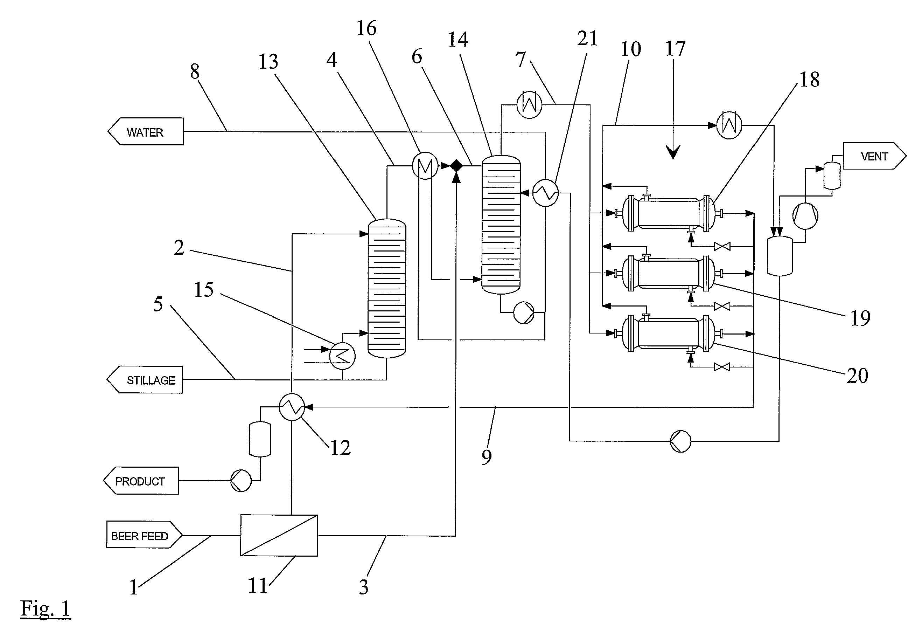

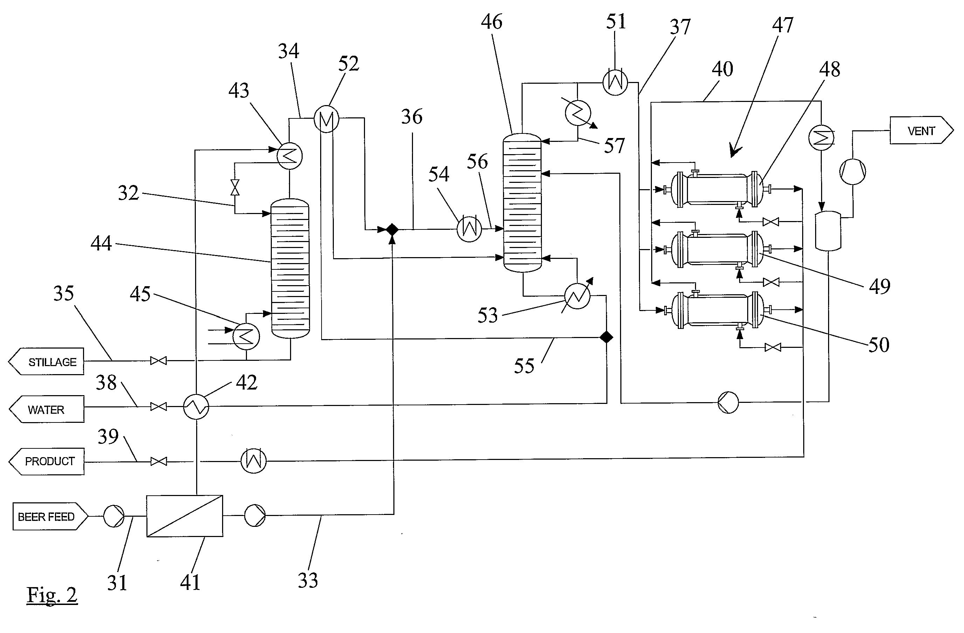

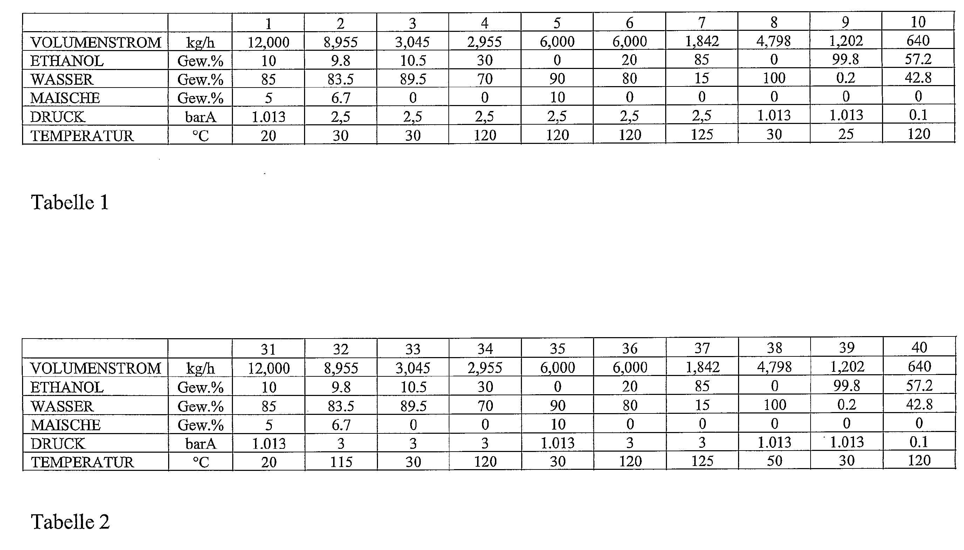

Aus den der Zeichnung anhängenden Tabellen 1 und 2 können weiter, korrespondierend mit den Positionsziffern 1-10 und 31-40, die dort anzutreffenden physikalischen Größen, lediglich beispielhaft, abgelesen werden, wobei sich die Prozesse gem. den Figuren 1 und 2 im Wesentlichen lediglich durch eine unterschiedliche Nutzung der vorhandenen Prozesswärme unterscheiden.

Fig. 1 zeigt schematisch eine Vorrichtung für die Destillation bzw. Dehydrierung von Ethanol aus einer Biermaische (Beer Feed) als Zulauf 1.

Die Maische enthält etwa 10 Gew.% Ethanol, 85 Gew.% Wasser und 5% Festkörper bei einer Temperatur von bspw. 20°C. In einer Membran-Trennstation 11 erfolgt eine Trennung in ein Retentat 2 mit einem erhöhten Maischebreianteil und Feststoffen und in ein Permeat 3, einem in einer auschließlich flüssigen Phase vorliegenden Wasser-Ethanol-Fuselölgemisch. Das Retentat 2 mit erhöhter Maischebreikonzentration und Feststoffen wird von einem Wärmetauscher 12 um bspw. 10°C auf 30°C erwärmt der ersten Destillationskolonne 13 oder Stripper zugeführt.

Das flüssige Permeat 3 der Membran-Trennstation 11 des Zulaufs 1 wird direkt einer zweiten Destillationskolonne 14, einer Rektifizierkolonne zugeführt.

Da das in die erste Destillationskolonne 13 eingebrachte Retentat 2 eine erhöhte Maischebreikonzentration aufweist, kann die erste Destillationskolonne 13 effektiv betrieben werden und ist ein vollständiges Verdampfen des Permeats in der ersten Destillationskolonne 13 nicht von Nöten. Vielmehr erfolgt dort eine Trennung in ein Ethanol-Wassergemisch mit erhöhtem Ethanolanteil, von dem letztlich nur der Ethanolanteil verdampft werden muß, während im Sumpf anfallendes Wasser und Feststoffe als Sumpfprodukt 5 (Stillage) dem Prozess entzogen wird.

Ein Teil des Sumpfproduktes 5 kann in an sich üblicher Weise nach Erwärmung mittels eines Wärmetauschers 15 der ersten Destillationskolonne 13 erneut zugeführt werden.

Das Destillat 4 der ersten Destillationskolonne 13, das einen Ethanolanteil von bspw. 30% aufweist, wird über einen weiteren Wärmetauscher 16 abgezogen und danach mit dem Permeat 3 gemischt. Das Gemisch 6 wird mit bevorzugt konstantem Volumenstrom der zweiten Destillationskolonne 14 zugeführt. Bspw. beträgt bei diesem Gemischs 6 der Ethanolanteil 20 Gew.% und der Wasseranteil 80 Gew.% bei einer Temperatur von 120°C, vgl. auch die Angaben in den Tabellen. Dabei verbleibt das Gemisch 6 bevorzugt in einer flüssigen Phase am Siedepunkt.

Das Destillat 7 der zweiten Destillationskolonne (14) weist beispielhaft bei einer Temperatur von 125°C 85 Gew.% Ethanol und 15 Gew.% Wasser noch auf. Bereits bei ca. 80 Gew.% Ethanol gegenüber nötigen 90 - 95 Gew.% herkömmlicher Verfahren des Destillats 7 der zweiten Destillationskolonne 14 kann nach dem erfindungsgemäßen Verfahren eine Enddehydrierung mittels eines Membrantrennverfahrens erfolgen.

Dazu wird das Destillat 7 der zweiten Destillationskolonne einer Gruppe 17 von hier beispielhaft drei parallel geschalteter Membranmodulen 18,19,20 zugeführt. Das nach der Membranfiltration, insbesondere einer Dampfpermeation austretende Retentat 9 stellt das Endprodukt dar, nämlich hochreines Ethanol mit lediglich 0,2 Gew.% bishin zu 0,05Gew.% Wasseranteilen. Nach Abkühlung über den Wärmetauscher 12 zur Vorerwärmung des der ersten Destillationskolonne 13 zugeführten Retentats 2 steht das Endprodukt (Product) zur Verfügung.

Die Membranmodule 18-20 können in einer Sweep-Technik betrieben werden, wozu eine gewisse Menge des das Endprodukt darstellenden Retentats 9 jeweils den Membranfiltermodulen 18-20 erneut zurückgeführt wird, die diese als Spülstrom durchströmt und die mit dem angefallenen Permeat als Mischung 10 mit einem Ethanolanteil von bspw. 57,2 Gew.% und einem Wasseranteil von 42,8% in einem Wärmetauscher 21 in einem Vakuum kondensiert und gegebenenfalls über einen Sammelbehälter und von einer nicht dargestellten Pumpe der zweiten Destillationskolonne 14 für eine Aufbereitung zurückgeführt wird. Der Wärmetauscher 21 nutzt hier die Abwärme des Wassers als einziges Sumpfprodukt 8 der zweiten Destillationskolonne 14, das danach auf 30°C bspw. abgekühlt ist.

Bei dem Verfahren nach Figur 2 erfolgt eine Destillation bzw. Dehydrierung von Ethanol aus einer Biermaische (Beer Feed) als Zulauf 31, die in ihrer Zusammensetzung der des ersten Ausführungsbeispiels entspricht.

In einer Membran-Trennstation 41 erfolgt wieder eine Trennung in ein Retentat 32 und ein Permeat 33. Das Retentat 33 wird, über zwei Wärmetauscher 42,43 und/oder einen Kopfkondensator einer ersten Destillationskolonne 44, auf ca. 115°C aufgeheizt, dieser ersten Destillationskolonne 44 zugeführt.

In der ersten Destillationskolonne 44 aufkonzentrierte Biermaische wird als Sumpfprodukt 35 zum Teil über einen Wärmetauscher 45 der ersten Destillationskolonne 44 zurückgeführt, so dass diese optimal betrieben werden kann (Reboiler). Überschüssiges Sumpfprodukt 35 wird dem Prozess entzogen.

Das Permeat 33 sowie das Destillat 34 der ersten Destillationskolonne 44 werden gemeinsam als Gemisch 36 einer zweiten Destillationskolonne 46 zugeführt.

Bei der zweiten Destillationskolonne 46 wird ein Teil des aufgereinigten Wassers nach Verdampfen in einem Wärmetauscher 53 unmittelbar der zweiten Destillationskolonne 46 wieder zurückgeführt (Reboiler) und überschüssiges Wasser (WATER) 38 aus der zweiten Destillationskolonne 46 wird über einen Wärmetauscher 42 entfernt. Ein weiterer Teilstrom 55 des aufgereinigten Wassers wird über einen Wärmetauscher 52 verdampft und dient danach als Betriebsmittel der zweiten Destillationskolonne 46. Der Wärmetauscher 52 dient dabei als Reboiler des Teilstroms 55 des aufgereinigten Wassers. Hierbei kondensiert das Destillat 34 der ersten Destillationskolonne 44.

Das Gemisch 36 aus dem Destillat 34 der ersten Kolonne 44 und dem Permeat 33 der Membran-Trennstufe 41 des Zulaufs 31 wird bei hoher Temperatur, jedoch als flüssige Phase nahe an dem Siedepunkt vorliegend, der zweiten Destillationskolonne 46 über einen unmittelbar vor dem Zulauf 56 angeordneten Wärmetauscher 54, insbesondere einem Kondensator, zugeführt. Über den Wärmetauscher 54 kann überschüssige Wärme, entstanden durch die Verdampfung der Flüssigkeit in der ersten Destillationskolonne 44, aus dem Prozess ausgekoppelt und anderweitig zur Verfügung gestellt werden.

Ein Teilstrom 57 des Destillats der zweiten Destillationskolonne 46 wird dieser wieder zurückgeführt (Reflux), während der Hauptstrom 37 über einen Überhitzer 51 einer Gruppe 47 von Membranmodulen 48-50 zugeführt wird.

Auch die Membranmodule 48-50 werden wieder in einer Sweep-Technik betrieben, wozu jeweils ein Teilstrom des das Endprodukt darstellenden Retentats 39 an die Membranmodule 48-50 zurückgeführt wird, dieser in der eingangs erläuterten Weise die Module durchströmt und als Gemisch 40 mit dem in den Membranmodulen 48-50 angefallenen Permeat zu der zweiten Destillationskolonne 46 rückgeführt wird.

## Patentansprüche

1. Verfahren der Destillation, insbesondere von Ethanol aus einer Maische, bei dem ein Zulauf einer ersten Destillationskolonne (13) und ein Destillat der ersten Destillationskolonne einer zweiten Destillationskolonne (14) zugeführt wird, **dadurch gekennzeichnet, dass** mittels eines ersten Membran-Trennverfahrens eine Reinigung des Zulaufs (1) erfolgt, wobei ein Permeat (3) des ersten Membran-Trennverfahrens der zweiten Destillationskolonne (14) und ein Retentat (2) des ersten Membran-Trennverfahrens der ersten Destillationskolonne (13) zugeführt wird und/oder mittels eines zweiten Membran-Trennverfahrens eine Reinigung des Destillats (7) der zweiten Destillationskolonne (14) für den Erhalt eines Endprodukts erfolgt.

2. Verfahren nach Anspruch 1, **dadurch gekennzeichnet, dass** das Membran-Trennverfahren ein Membranverfahren ist.

3. Verfahren nach einem oder mehreren der vorangehenden Ansprüche, **dadurch gekennzeichnet, dass** das Membranverfahren eine dynamische Cross Flow Membranfiltration ist.

4. Verfahren nach einem oder mehreren der vorangehenden Ansprüche, **dadurch gekennzeichnet, dass** das Permeat (3) des Membran-Trennverfahrens des Zulaufs (1) mit dem Destillat (4) der ersten Destillationskolonne (13) als ein Gemisch (6) der zweiten Destillationskolonne (14) zugeführt wird.

5. Verfahren nach einem oder mehreren der vorangehenden Ansprüche 1 bis 4, **dadurch gekennzeichnet, dass** das Permeat des Membran-Trennverfahrens des Zulaufs und das Destillat der ersten Destillationskolonne jeweils gesondert der zweiten Destillationskolonne zugeführt wird.

6. Verfahren nach einem oder mehreren der vorangehenden Ansprüche, **dadurch gekennzeichnet, dass** Gemisch oder das jeweils gesondert der zweiten Destillationskolonne zugeführte Permeat und/oder das Destillat der ersten Destillationskolonne flüssig am Siedepunkt gehalten ist.

7. Verfahren nach einem oder mehreren der vorangehenden Ansprüche, **dadurch gekennzeichnet, dass** das Mengenverhältnis des Retentats (3) zu dem Permeat (2) des Membran-Trennverfahrens des Zulaufs (1) zwischen 1 und 8 liegt.

8. Verfahren nach einem oder mehreren der vorangehenden Ansprüche, **dadurch gekennzeichnet, dass** der Wasseranteil des Permeats (3) des Membran-Trennverfahrens des Zulaufs (1) in der zweiten Destillationskolonne (14) in einer flüssigen Phase verbleibt.

9. Verfahren nach einem oder mehreren der vorangehenden Ansprüche, **dadurch gekennzeichnet, dass** das Destillat (7) der zweiten Destillationskolonne (14) einen Ethanolanteil zwischen 75 und 95 Gew.% aufweist.

10. Verfahren nach einem oder mehreren der vorangehenden Ansprüche, **dadurch gekennzeichnet, dass** das Destillat (7) der zweiten Destillationskolonne (14) einer Gruppe (17) parallel geschalteter Membranmodule (18-20) zugeführt wird.

11. Verfahren nach einem oder mehreren der vorangehenden Ansprüche, **dadurch gekennzeichnet, dass** das Destillat der zweiten Destillationskolonne (46) den Membranmodulen (48-50) über einen Überhitzer (51) zugeführt wird.

12. Verfahren nach einem oder mehreren der vorangehenden Ansprüche, **dadurch gekennzeichnet, dass** ein Teil eines das Endprodukt darstellenden Retentats (9) der Membranmodule (18-20) jeweils einem Membranmodul (18-20) als Spülstrom der Permeatseite erneut zugeführt wird und nach dessen Durchströmen zusammen mit dem angefallenen Permeat der zweiten Destillationskolonne (14) als Speisestrom (10) wieder zurückgeführt wird.

13. Verfahren nach einem oder mehreren der vorangehenden Ansprüche, **dadurch gekennzeichnet, dass** das Permeat (10) der Membranmodule (18-20) durch die Wärme des abgeführten Sumpfproduktes (8) der zweiten Destillationskolonne (14) vorgewärmt wird.

14. Verfahren nach einem oder mehreren der vorausgehenden Ansprüche, **dadurch gekennzeichnet, dass** die Wärme des Endproduktes (9) und/oder eines Sumpfprodukts (38) der zweiten Destillationskolonne (46) für eine Vorerwärmung des Retentats (2,32) des Membran-Trennverfahrens des Zulaufs (1,31) genutzt wird.

15. Verfahren nach einem oder mehreren der vorangehenden Ansprüche, **dadurch gekennzeichnet, dass** der Zulauf (56) der zweiten Destillationskolonne (46) einen Wärmetauscher aufweist.

16. Verfahren nach einem oder mehreren der vorangehenden Ansprüche, **dadurch gekennzeichnet, dass** die zweite Destillationskolonne durch zwei voneinander separierte Destillationskolonnen ausgebildet wird.

17. Verfahren nach einem oder mehreren der vorangehenden Ansprüche, **dadurch gekennzeichnet, dass** das Destillat der zweiten Destillationskolonne (46) über einen Überhitzer (51) der Gruppe (47) von Membranmodulen zugeführt wird.

## Claims

1. Method for distilling, in particular ethanol from a mash, in which a feed is fed into a first distillation column (13) and a distillate from the first distillation column is fed into a second distillation column (14), **characterised in that** the feed (1) is purified by means of a first membrane separation process, a permeate (3) from the first membrane separation process being fed into the second distillation column (14) and a retentate (2) from the first membrane separation process being fed into the first distillation column (13) and/or the distillate (7) from the second distillation column (14) being purified by means of a second membrane separation process in order to obtain a final product.

2. Method according to claim 1, **characterised in that** the membrane separation process is a membrane process.

3. Method according to one or more of the preceding claims, **characterised in that** the membrane process is a dynamic cross-flow membrane filtration process.

4. Method according to one or more of the preceding claims, **characterised in that** the permeate (3) from the membrane separation process of the feed (1) is fed, together with the distillate (4) from the first distillation column (13), as a mixture (6) into the second distillation column (14).

5. Method according to one or more of the preceding claims 1 to 4, **characterised in that** the permeate from the membrane separation process of the feed and the distillate from the first distillation column are each fed separately into the second distillation column.

6. Method according to one or more of the preceding claims, **characterised in that** the mixture or the permeate and/or the distillate from the first distillation column, which are each fed separately into the second distillation column, is maintained in liquid phase at boiling point.

7. Method according to one or more of the preceding claims, **characterised in that** the volume ratio of the retentate (3) to the permeate (2) from the membrane separation process of the feed (1) is between 1 and 8.

8. Method according to one or more of the preceding claims, **characterised in that** the water content of the permeate (3) from the membrane separation process of the feed (1) remains in liquid phase in the second distillation column (14).

9. Method according to one or more of the preceding claims, **characterised in that** the distillate (7) from the second distillation column (14) has an ethanol content of between 75 and 95 wt.%.

10. Method according to one or more of the preceding claims, **characterised in that** the distillate (7) from the second distillation column (14) is fed into a group (17) of membrane modules (18-20) that are connected in parallel.

11. Method according to one or more of the preceding claims, **characterised in that** the distillate from the second distillation column (46) is fed into the membrane modules (48-50) via a superheater (51).

12. Method according to one or more of the preceding claims, **characterised in that** a portion of a retentate (9) from the membrane modules (18-20), which retentate represents the final product, is fed again into one membrane module (18-20) in each case as a flushing stream on the permeate side, and after said portion has passed through, it is recycled as a feed stream (10) together with the permeate accumulated in the second distillation column (14).

13. Method according to one or more of the preceding claims, **characterised in that** the permeate (10) from the membrane modules (18-20) is preheated by the heat of the removed bottom product (8) from the second distillation column (14).

14. Method according to one or more of the preceding claims, **characterised in that** the heat of the final product (9) and/or a bottom product (38) from the second distillation column (46) is used to preheat the retentate (2, 32) from the membrane separation process of the feed (1, 31).

15. Method according to one or more of the preceding claims, **characterised in that** the feed (56) of the second distillation column (46) comprises a heat exchanger.

16. Method according to one or more of the preceding claims, **characterised in that** the second distillation column is formed by two separate distillation columns.

17. Method according to one or more of the preceding claims, **characterised in that** the distillate from the second distillation column (46) is fed into the group (47) of membrane modules via a superheater (51).

## Revendications

1. Procédé de distillation, en particulier d'éthanol obtenu à partir d'un moût, pour laquelle un conduit d'alimentation est amenée à une première colonne de distillation (13) et un distillat de la première colonne de distillation est amené à une deuxième colonne de distillation (14), **caractérisé en ce qu'**un nettoyage du conduit d'alimentation (1) est réalisé au moyen d'un premier procédé de séparation à membrane, dans lequel un perméat (3) du premier procédé de séparation à membrane est amené à la deuxième colonne de distillation (14) et un rétentat (2) du premier procédé de séparation à membrane est amené à la première colonne de distillation (13) et/ou un nettoyage du distillat (7) de la deuxième colonne de distillation (14) est réalisé au moyen d'un deuxième procédé de séparation à membrane en vue de l'obtention d'un produit final.

2. Procédé selon la revendication 1, **caractérisé en ce que** le procédé de séparation à membrane est un procédé à membrane.

3. Procédé selon l'une ou plusieurs des revendications précédentes, **caractérisé en ce que** le procédé à membrane est une filtration dynamique tangentielle à membrane.

4. Procédé selon l'une ou plusieurs des revendications précédentes, **caractérisé en ce que** le perméat (3) du procédé de séparation à membrane du conduit d'alimentation (1) est amené à la deuxième colonne de distillation (14), avec le distillat (4) de la première colonne de distillation (13), sous la forme d'un mélange (6).

5. Procédé selon l'une ou plusieurs des revendications précédentes 1 à 4, **caractérisé en ce que** le perméat du procédé de séparation à membrane du conduit d'alimentation et le distillat de la première colonne de distillation sont amenés, respectivement de manière séparée, à la deuxième colonne de distillation.

6. Procédé selon l'une ou plusieurs des revendications précédentes, **caractérisé en ce que** le mélange ou le perméat, amené respectivement de manière séparée à la deuxième colonne de distillation, et/ou le distillat de la première colonne de distillation sont maintenus à l'état liquide au point d'ébullition.

7. Procédé selon l'une ou plusieurs des revendications précédentes, **caractérisé en ce que** le rapport quantitatif du rétentat (3) par rapport au perméat (2) du procédé de séparation à membrane du conduit d'alimentation (1) est compris entre 1 et 8.

8. Procédé selon l'une ou plusieurs des revendications précédentes, **caractérisé en ce que** la part en eau du perméat (3) du procédé de séparation à membrane du conduit d'alimentation (1) demeure dans une phase liquide dans la deuxième colonne de distillation (14).

9. Procédé selon l'une ou plusieurs des revendications précédentes, **caractérisé en ce que** le distillat (7) de la deuxième colonne de distillation (14) présente une teneur en éthanol comprise entre 75 et 95% en poids.

10. Procédé selon l'une ou plusieurs des revendications précédentes, **caractérisé en ce que** le distillat (7) de la deuxième colonne de distillation (14) est amené à un groupe (17) de modules à membrane (18 - 20) installés en parallèle.

11. Procédé selon l'une ou plusieurs des revendications précédentes, **caractérisé en ce que** le distillat de la deuxième colonne de distillation (46) est amené aux modules à membrane (48 - 50) par l'intermédiaire d'un surchauffeur (51).

12. Procédé selon l'une ou plusieurs des revendications précédentes, **caractérisé en ce qu'**une partie d'un rétentat (9) des modules à membrane (18 - 20), lequel rétentat représente le produit final, est, respectivement, de nouveau amené à un module à membrane (18 - 20) sous la forme d'un flux de rinçage de la partie du perméat et, après sa circulation, est réacheminé conjointement avec le perméat accumulé de la deuxième colonne de distillation (14) sous la forme d'un courant d'alimentation (10).

13. Procédé selon l'une ou plusieurs des revendications précédentes, **caractérisé en ce que** le perméat (10) des modules à membrane (18-20) est préalablement chauffé par la chaleur du produit résiduel (8) évacué de la deuxième colonne de distillation (14).

14. Procédé selon l'une ou plusieurs des revendications précédentes, **caractérisé en ce que** la chaleur du produit final (9) et/ou d'un produit résiduel (38) de la deuxième colonne de distillation (46) est utilisée pour un préchauffage du rétentat (2, 32) du procédé de séparation à membrane du conduit d'alimentation (1, 31).

15. Procédé selon l'une ou plusieurs des revendications précédentes, **caractérisé en ce que** le conduit d'alimentation (56) de la deuxième colonne de distillation (46) présente un échangeur de chaleur.

16. Procédé selon l'une ou plusieurs des revendications précédentes, **caractérisé en ce que** la deuxième colonne de distillation est formée par deux colonnes de distillation, lesquelles sont séparées l'une de l'autre.

17. Procédé selon l'une ou plusieurs des revendications précédentes, **caractérisé en ce que** le distillat de la deuxième colonne de distillation (46) est amené au groupe (47) de modules à membrane par l'intermédiaire d'un surchauffeur (51).
